# EUROPEAN PATENT APPLICATION

(11) **EP 2 610 166 A2**
(43) Date of publication of application: **03.07.2013**
(21) Application number: 12008613.7
(22) Date of filing: 27.12.2012
(51) Int. Cl.: B64C 1/06, B32B 5/12

(54) **Composite gusset filler and method of manufacture of said composite gusset filler**

(30) Priority: 28.12.2011 EP 11400063
(71) Applicant: EUROCOPTER DEUTSCHLAND GmbH, 86609 Donauwörth (DE)
(72) Inventor: Wolf, Christian, D-89231 Neu-Ulm (DE); Niemann, Hanno, D-90408 Nuernberg (DE); Beier, Uwe, D-85635 Höhenkirchen-Siegertsbrunn (DE); Hänsch, Peter, D-86391 Stadtbergen (DE)
(74) Representative: GPI & Associés

(57) **Abstract**

The present invention relates to a composite gusset filler (1) of cut-off material from fiber fabrics (2, 3) trimmed into fragments of 2 mm - 10 mm length, separated into single yarn or roving elements mixed to quasi-homogeneous raw material for a semi-finished gusset filler (1). The present invention relates as well to specific shapes and a method of manufacture of said composite gusset filler (1) and to applications of said composite gusset filler (1).

## Description

The present invention relates to a composite gusset filler according to the features of the preamble of claim 1 and to a method of manufacture of said composite gusset filler according to the features of the preamble of claim 8. The present invention relates as well to applications of said composite gusset filler according to the features of the preamble of claim 11.

Fiber composite spars or skin-stiffener transitions are made by binding two "C" channels together to form a web with curved flanges. The channels may comprise a plurality of plies of fiber fabrics either in dry state or pre-impregnated with resin. When the channels are joined at the webs, a so-called interstice occurs because of the radii along the curved flanges. Typically, a gusset filler fills the interstice.

Existing designs for gusset fillers are structurally inadequate and are challenging and expensive to produce or leave the structural integrity of the resulting composite in question.

The document US 2006214058 A1 discloses a number of integrated floor structures made of lightweight composite materials for use in an aircraft. Each of such floors includes a top-layer skin, a bottom-layer skin disposed below the top-layer skin and a first structural core disposed between the top-layer skin and the bottom-layer skin, the first structural core being composed of a honeycomb composite material. One or more denser structural cores can also be incorporated at strategic locations.

The document US 2003044570 A1 discloses a laminated composite (multi-ply) gusset filler with a plurality of woven fabric reinforced plies, cut to fill a radius gap, to increase absolute strength, to increase specific strength, or to reduce cost by reducing cracking and distortion in the radius of a composite assembly.

It is an objective of the invention to provide a composite gusset filler that better meets the challenges faced with design of composite assemblies, like a skin-stiffener transition, under structural loading. It is a further objective of the invention to provide a method of manufacture of said composite gusset filler and applications for said composite gusset filler.

The solution is provided with a composite gusset filler according to the features of claim 1 and a method of manufacture of said composite gusset filler according to the features of claim 8. A further solution is provided with applications of said composite gusset filler according to the features of claim 11.

According to the invention a composite gusset filler for a skin-stiffener transition (assembly) is made of cut-off or scrap material from at least one textile carbon fiber reinforced plastic (CFRP) ply. The cut-off material is trimmed into fragments of 2 mm - 10 mm length, preferably into fragments of 4 mm +/-1 mm length. Said fragments decompose into single yarn and/or roving elements by and/or after trimming. The single yarn and/or roving elements are mixed to quasi-homogeneous raw material with yarn and/or roving elements oriented like felt in all 3D directions. The quasi-homogeneous raw material is subsequently further processed to the inventive composite gusset filler. Since cut-off material is used for the inventive composite gusset filler the raw material costs only reflect the process costs, such as trimming, etc.. Thus according to a first advantage of the invention the inventive composite gusset filler will be very cost effective after processing of the raw material into the desired geometry. The inventive composite gusset filler allows on top automated production processes providing net shapes and non-limited shapes of the inventive composite gusset filler to fill interstices by using precise manufacturing routines. A semi-finished skin-stiffener transition with the inventive composite gusset filler will support a quick assembly during preform assembly and so it contributes again to cost savings in the CFRP production process. According to a further advantage of the invention incompatibilities between the inventive composite gusset filler material and the ply material of the skin-stiffener transition can be excluded as the filler material (generally) is the same as the ply material. According to a still further advantage of the invention not only endless extrusions of the inventive composite gusset filler can be manufactured.

The inventive composite gusset filler will support any advantageous gusset section geometry, e. g. optimized section shapes. As a consequence of the advantages provided by the invention results an increase in strength and structural integrity of the skin-stiffener transition allowing exploitation in a reduction of structural mass, i. e. frozen margin of safety. Structural integrity of the CFRP parts may also be increased by homogeneous or specially tailored fiber orientations. For the purposes of the invention the term "yarn" is used with the meaning of fiber.

The inventive composite gusset filler material itself is manufacturing friendly and easy to handle. Since scrap material can be used for the inventive composite gusset filler material disposal costs could be saved as well.

According to a preferred embodiment of the invention the raw material for the inventive composite gusset filler is stored with a random fiber orientation.

According to a further preferred embodiment of the invention the quasi-homogeneous raw material is provided with sufficient single yarn or roving elements oriented according to the main load direction in the area of the inventive composite gusset filler. The single yarn or roving elements oriented according to the main load direction allow improved bearing capacity of the inventive composite gusset filler.

According to a further preferred embodiment of the invention the fiber volume content of the inventive composite gusset filler is 40 % to 60 %, preferably about 50 %.

According to a further preferred embodiment of the invention an endless extrusion profile of dry fibers is provided for sufficient dimensional stability during preform manufacturing, injection and curing of the composite. In addition to that the extrusion profile is easy to bend and/or to adapt to curvatures as well as easy to integrate into any dry fiber preform assembly.

According to a further preferred embodiment of the invention the inventive composite gusset filler is essentially isotropic, i. e. quasi homogenous, and comprises at least a press formed or customized extruded net shaped section for geometries of the inventive composite gusset filler which are capable to change the load distribution in a skin-stiffener transition.

According to a further preferred embodiment of the invention the net shaped section is designed for optimized stress distribution and subsequent increased load transfer capabilities through the skin-stiffener transition using catenoid-shaped section geometries or geometries developed from analytical or numerical optimization routines.

According to a preferred embodiment of the invention a method of manufacture of said inventive composite gusset filler for a semi-finished skin-stiffener transition comprises the steps of cutting material from textile CFRP ply, trimming the cut material from textile CFRP plies into fragments of 2 mm - 10 mm length, preferably into fragments of 4 mm +/-1 mm length, decomposing the cut textile CFRP plies into single yarn and/or roving elements, mixing the single yarn and/or roving elements to quasi-homogeneous raw material, and processing the quasi-homogeneous raw material to a desired geometry for said inventive composite gusset filler.

According to a further preferred embodiment of the invention the processing of press-forming or customized extrusion allowing compression of the raw material continuously from each direction uses a special extrusion tool, such as a propagation cone, or simulates this situation with a press forming tool. The continuous production process leads to a cost efficient, isotropic and net shape inventive composite gusset filler. The continuous compression from each direction leads to a random fiber orientation in the core of the gusset filler including fibers oriented perpendicular to the ply surface and thus as well to sufficient fibers in the critical direction of gusset filler loading.

According to a further preferred embodiment of the invention the dry fibers fabrics in use are equipped with a thermoplastic binder material. Heat is applied to activate the binder on the cut-off fibers in the gusset filler to assure the gusset fillers specified shape.

According to a preferred embodiment of the invention said composite gusset filler is applied to semi-finished skin-stiffener transitions for helicopter airframes, helicopter structural parts, airplane doors, airplane frame manufacturing and/or non-aerospace applications.

A preferred embodiment of the invention is described in the following description with reference to the attached drawings.
FIG. 1 is a sectional view of a composite gusset filler.
FIG. 2 is a sectional view of a composite gusset filler according to the invention.

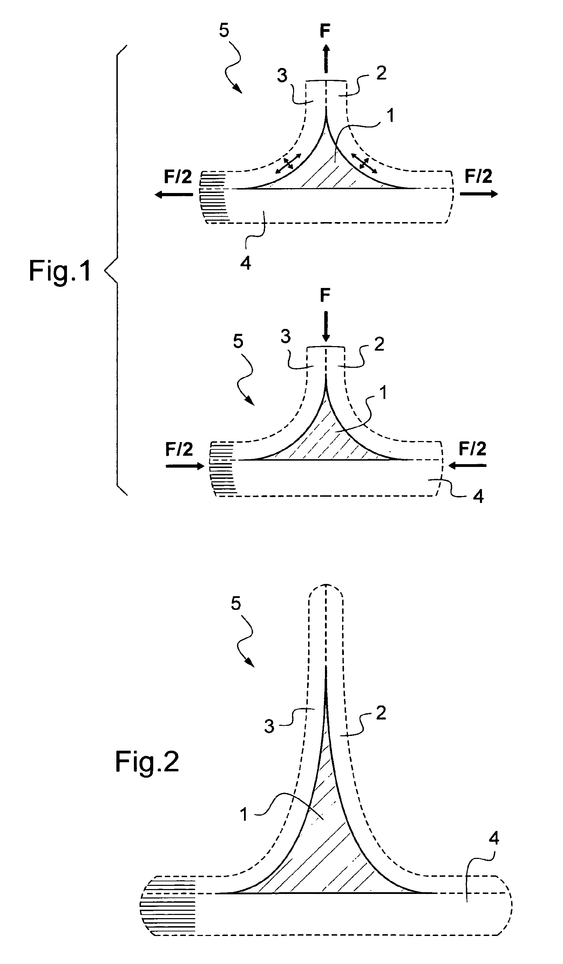

As shown in FIG. 1 a composite gusset filler 1 for a semi-finished skin-stiffener transition 5 is encompassed by two C-shaped preforms made from fiber-reinforced fabric plies 2, 3 of a semi-finished part for a skin-stiffener transition 5 of an aircraft structure (not shown). The two C-shaped preforms 2, 3 adhere to a skin 4 of the skin-stiffener transition 5. The semi-finished gusset filler 1 is used to create preforms for resin-injected CFRP parts. Preform means the fiber architecture of a CFRP part glued and compacted.

Each of the two C-shaped preformed fiber-reinforced fabric plies 2, 3 are conceived as a laminate ply stacking.

If a tensile load F is applied to the two C-shaped preformed fiber-reinforced fabric plies 2, 3 supplemental to in plane stresses σ11 result out-of plane stresses σ33 in the respective two C-shaped textile CFRP plies 2, 3. Said out-of plane stresses σ33 may lead to failure, such as debonding or delamination of the skin-stiffener transition 5. Radii at the respective laminate ply stackings may collapse if a compressive load F is applied to the two C-shaped preformed fiber-reinforced fabric plies 2, 3 and if said compressive load F is not dissipated into any other region of the skin-stiffener transition 5.

The composite gusset filler 1 acts against debonding or delamination of the skin-stiffener transition 5 by either preventing or allowing a certain amount of deformation of the filler area.

According to FIG. 2 corresponding features are referred to with the references of Fig. 1. The composite gusset filler 1 for a semi-finished skin-stiffener transition 5 is encompassed by two L-shaped preforms made from fiber-reinforced fabric plies 2, 3 of a semi-finished part for a skin-stiffener transition 5 of an aircraft structure (not shown). The two L-shaped preforms adhere to a skin 4 of the skin-stiffener transition 5. Each of the two L-shaped preformed fiber-reinforced fabric plies 2, 3 are conceived as a laminate ply stacking.

Cut-off material is provided from disposal of the ply or from bagged cargo textile CFRP plies 2, 3. The composite gusset filler 1 is made of said cut-off material from at least one of one or two dimensional textile CFRP ply 2, 3. A two dimensional textile CFRP ply 2, 3 is cut with an angle of preferably 45° relative to any fiber directions of said ply 2, 3 to trimmed fragments of 2 mm - 10 mm length, preferably fragments of 4 mm +/-1 mm length. Said fragments are decomposed into single yarn or roving elements with respective widths in the range of fibers.

Said single yarn or roving elements are subsequently mixed to random directions to become a quasi-homogeneous raw material. Said quasi-homogeneous raw material is shaped to the composite gusset filler 1 by press-forming or customized extrusion of the raw material to fill the curved interstice between the two L-shaped preforms. The raw material is compressed continuously from each direction using a special extrusion tool, such as a propagation cone, or to simulate this situation with a press forming tool.

After processing the raw material into the desired geometry either by press-forming or by a customized extrusion process, heat is applied to activate a binder with a thermoplastic finish or a thermoset finish of the original textile material. With compression of the raw material continuously from each direction using the special extrusion tool or simulation of this compression with the press forming tool an isotropic and net shape composite gusset filler 1 is produced. The continuous compression of the raw material from each direction leads to a random fiber orientation but comprising fibers oriented perpendicular to the ply surface, i. e. in the critical load direction.

A typical version of such a gusset filler 1 consists of a dry fiber and endless extrusion profile with dimensional stability during preform manufacturing, injection and curing of the composite. The extrusion is easy to bend / adapt to curvatures as well as easy to integrate into a dry fiber preform assembly.

The composite gusset filler 1 is applied for semi-finished skin-stiffener transitions 5 of helicopter airframes, helicopter structural parts, airplane doors, airplane fuselage & cabin structures and/or non-aerospace applications.

### Reference List

- 1: composite gusset filler
- 2: L-shaped textile CFRP ply
- 3: L-shaped textile CFRP ply
- 4: skin
- 5: skin-stiffener transition

## Claims

1. A composite gusset filler (1) for a skin-stiffener transition assembly (5), **characterized by** comprising quasi-homogeneous raw material of mixed single yarn and/or roving elements from cut-off material from at least one textile CFRP ply (2, 3), trimmed into fragments of 2 mm - 10 mm length, preferably into fragments of 4 mm +/-1 mm length.

2. The composite gusset filler (1) according to claim 1,
**characterized in that** the raw material is stored with a random fiber orientation.

3. The composite gusset filler (1) according to claim 1,
**characterized in that** the quasi-homogeneous raw material is provided with single yarn or roving elements oriented according to the main load direction in the gusset area.

4. The composite gusset filler (1) according to claim 1,
**characterized in that** the fiber volume content is 40 % to 60 %, preferably about 50 %.

5. The composite gusset filler (1) according to claim 1,
**characterized in that** an endless extrusion profile of dry fiber material is provided from the raw material.

6. The composite gusset filler (1) according to claim 1, **characterized by** comprising a specific net shaped section after press forming of the raw material or applying a propagation cone to the raw material.

7. The composite gusset filler (1) according to claim 6,
**characterized by** comprising a net shaped section using catenoid-shaped section geometries or geometries developed from analytical or numerical optimization routines.

8. A method of manufacture of said composite gusset filler (1) according to any of the preceding claims, comprising the steps of:
(a) cutting material from textile CFRP plies (2, 3),
(b) trimming the cut material into fragments of 2 mm - 10 mm length, preferably into fragments of 4 mm +/-1 mm length,
(c) sorting the fragments into single yarns and/or roving elements,
(d) mixing the single yarns and/or roving elements to quasi-homogeneous raw material, and
(e) processing the quasi-homogeneous raw material to a desired geometry for the semi-finished composite gusset filler (1).

9. The method according to claim 8,
**characterized in that** the processing is press-forming or customized extrusion.

10. The method according to claim 8,
**characterized in that** heat is applied to activate a binder on the cut-off fibers of the textile CFRP plies (2, 3).

11. An application of said composite gusset filler (1) according to any of the preceding claims for a semi-finished skin-stiffener transition (5) of helicopter airframes, helicopter structural parts, airplane doors, airplane frame manufacturing and/or non-aerospace applications.
